# EUROPEAN PATENT APPLICATION

(11) **EP 4 813 685 A1**
(43) Date of publication of application: **30.09.2026**
(21) Application number: 25166087.4
(22) Date of filing: 25.03.2025
(51) Int. Cl.: B60K 1/04

(54) **BATTERY SUSPENSION USING BRACKETS WITH INTERFACE PORTIONS**

(71) Applicant: Volvo Truck Corporation, 405 08 Göteborg (SE)
(72) Inventor: LANDVIK, Sondre, 417 61 GÖTEBORG (SE); NAWKHARE, Nilesh Ravindra, 418 42 GÖTEBORG (SE)
(74) Representative: Kransell & Wennborg KB

(57) **Abstract**

The present disclosure relates to a battery suspension arrangement for a vehicle, the battery suspension arrangement comprising a pair of bracket arrangements configured to suspend a traction battery to a frame of the vehicle, each one of the pair of brackets arrangements comprising a first elongated bracket comprising a first interface portion arranged at a lower end and extends between a first and a second end, a second elongated bracket comprising a second interface portion arranged at an upper end and extends between a first and a second end, wherein the first and second interface portions are connected to each other for fastening the first and second elongated brackets to one another.

## Description

### TECHNICAL FIELD

The disclosure relates generally to battery suspension arrangements. In particular aspects, the disclosure relates to a battery suspension using brackets with interface portions. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

Battery electric vehicles (BEVs) require efficient and secure methods for mounting traction batteries to the vehicle frame. The design of such mounting systems must consider factors such as structural integrity, crash safety, ease of assembly, and maintainability. Existing solutions often involve complex installation processes that can impact production efficiency and serviceability. Additionally, ensuring proper load distribution and protection against vibrations and collisions is still a critical challenge in the development of battery suspension systems for heavy-duty electric vehicles.

### SUMMARY

According to a first aspect of the disclosure, there is provided a battery suspension arrangement for a vehicle, the battery suspension arrangement comprising a pair of bracket arrangements configured to suspend a traction battery to a frame of the vehicle, each one of the pair of brackets arrangements comprising a first elongated bracket extending from a first end to a second end, wherein the first end comprises a first surface configured to be connected to the frame of the vehicle, the first elongated bracket further comprising a first interface portion arranged at a lower end and extends between the first and second ends, a second elongated bracket extending from a first end to a second end, the second elongated bracket comprising a battery connecting portion configured to suspend the traction battery, wherein the battery connecting portion is arranged at a lower portion of the second elongated bracket between the first and second ends, the second elongated bracket further comprising a second interface portion arranged at an upper end and extends between the first and second ends, wherein the first and second interface portions are connected to each other for fastening the first and second elongated brackets to one another. The first aspect of the disclosure may seek to reduce the complexity of installing traction batteries in heavy-duty electric vehicles by providing a suspension arrangement that secures the battery to the vehicle frame while allowing for a more efficient assembly process. Conventional battery mounting systems may require multiple installation steps on the main assembly line, increasing production time and effort. Additionally, existing solutions may subject battery components to high stress due to vehicle frame twisting and external forces. The disclosed arrangement may address these issues by providing a structured connection between brackets that supports the battery while maintaining a stable attachment capable of withstanding operational loads. A technical benefit may include that the assembly complexity may be reduced by allowing the traction battery to be suspended using a structured bracket arrangement, which may in turn decrease installation time and improve manufacturing efficiency. Instead of assembling the suspension system part-by-part on the mainline, the first aspect enables pre-assembly of a larger module in a sub-flow, reducing the time required to complete each assembly operation within the production cycle, thereby increasing manufacturing efficiency and flexibility. Additionally, the use of vertical docking allows for integration with lifting systems, which may improve ergonomics and worker safety. Another technical benefit may include more effective load distribution between the first and second elongated brackets, which may reduce stress on the battery housing, thereby improving durability. The connection between the first and second interface portions may also provide a secure and stable attachment, helping to maintain battery positioning during vehicle operation and in crash scenarios, thereby improving safety.

The "lower portion" of the second elongated bracket refers to a region that is closer to the lower end than to an upper end of the second elongated bracket. The lower portion may be defined in various ways, depending on the specific implementation. For example, the lower portion may correspond to the lower half of the second elongated bracket when considering its full height between the lower and upper ends. Alternatively, the lower portion may be defined as the region below an upper end, such as any area situated below the midpoint or a predefined reference point along the height of the second elongated bracket. According to an example, the lower portion may extend from the lower end up to a predetermined fraction of the total height, such as the bottom one-third or one-quarter of the second elongated bracket. Additionally, the lower portion may be defined relative to other components, such as being positioned below the second interface portion or below the highest attachment point to the first elongated bracket.

Optionally in some examples, including in at least one preferred example, the first and second interface portions are configured to engage in a form-locking connection to restrict relative movement between the first and second elongated brackets. A technical benefit may include that the form-locking connection restricts unintended displacement between the first and second elongated brackets, which may improve structural stability and maintain consistent positioning of the traction battery during vehicle operation. Also, the form-locking connection may simplify guidance when connecting the first and second elongated brackets to each other.

Optionally in some examples, including in at least one preferred example, the form-locking connection is provided by interlocking shapes of the first and second interface portions. A technical benefit may include that the interlocking shapes distribute mechanical loads more evenly across the interface, which may reduce stress concentrations and improve durability over time.

Optionally in some examples, including in at least one preferred example, one of the first and second interface portions comprises an elongated protrusion, and the other one of the first and second interface portions comprises a corresponding elongated recess that interlocks with the protrusion. A technical benefit may include that the protrusion and recess improve alignment during assembly, which may reduce installation time and the need for precise manual adjustments.

Optionally in some examples, including in at least one preferred example, the battery suspension arrangement further comprising at least one fastener element securing the first and second brackets to each other. A technical benefit may include that the fastener element provides additional mechanical retention, which may enhance the connection between the first and second elongated brackets when exposed to dynamic vehicle loads.

Optionally in some examples, including in at least one preferred example, the at least one fastener element extends through the first and second interface portions. A technical benefit may include that directing the fastener through both interface portions increases shear strength at the connection, which may improve resistance to mechanical stresses and vibrations.

Optionally in some examples, including in at least one preferred example, the at least one fastener element is one of a screw or a bolt. A technical benefit may include that using a screw or bolt allows for secure attachment while permitting disassembly, which may improve serviceability and component replacement.

Optionally in some examples, including in at least one preferred example, the second end of the second elongated bracket comprises a vertically extending portion, and wherein at least a portion of the second end of the first elongated bracket faces the vertically extending portion. A technical benefit may include that the vertically extending portion allows for a protection plate to be pre-mounted and integrated with the second elongated bracket, which may simplify assembly and reduce installation steps. Additionally, the vertically extending portion may create a bump stop in the lateral direction between the first and second elongated brackets, which may improve the interface in a side collision and distribute crash loads more effectively. This may also reduce reliance on the vertical screws to absorb shear forces.

Optionally in some examples, including in at least one preferred example, the battery connecting portion comprises a first and a second battery supporting bushing, the first battery supporting bushing being positioned closer to the first end of the second elongated bracket than the second battery supporting bushing, and wherein the first and second battery supporting bushings are arranged in opposite directions relative to each other.

Optionally in some examples, including in at least one preferred example, the first battery supporting bushing of a first one of the second elongated brackets is arranged in a direction toward a second one of the second elongated brackets, and wherein the second battery supporting bushing of the second one of the second elongated brackets is arranged in a direction toward the first one of the second elongated brackets.

A technical benefit may include that forces caused by twisting of the frame may not be transmitted to the traction batteries. In detail, by connecting the traction battery to the first battery supporting bushing, i.e. to an inner bushing, of one of the brackets, as well as to the second battery supporting bushing, i.e. to an outer bushing, of another one of the brackets, torque and forces caused by frame twisting may not be transmitted to the traction battery, or transmitted at a significantly reduced magnitude. By providing the brackets and battery supporting bushing as described above, a pseudo-three-point suspension may be provided for the traction battery which allows for improved decoupling from frame twisting compared to e.g. a four-point suspension.

Optionally in some examples, including in at least one preferred example, the battery suspension arrangement further comprising a first and second elongated frame, each one of the first and second elongated frames comprises a battery support surface configured to suspend the traction battery. A technical benefit may include that the battery support surfaces provide a dedicated structural interface for securing the traction battery, which may improve weight distribution and reduce stress concentrations on the brackets.

Optionally in some examples, including in at least one preferred example, the first elongated frame is connected to the second bracket of a first one of the pair of brackets arrangements, and wherein the second elongated frame is connected to the second bracket of a second one of the pair of brackets arrangements. A technical benefit may include that connecting each elongated frame to a respective bracket arrangement may provide a rigid and stable framework, which may reduce unwanted flexing during vehicle operation.

Optionally in some examples, including in at least one preferred example, the pair of bracket arrangements is a first pair of bracket arrangements, the battery suspension arrangement further comprising a second pair of bracket arrangements, wherein the first and second pair of bracket arrangements are connectable to a respective longitudinally extending frame rail of the frame of the vehicle. A technical benefit may include that incorporating multiple pairs of bracket arrangements allows for modular scalability, which may enable adaptation to different battery configurations or vehicle designs. This may also improve the overall weight-bearing capacity of the suspension system by distributing loads across multiple mounting points, whereby larger traction batteries can be suspended to the frame of the vehicle.

Optionally in some examples, including in at least one preferred example, each one of the first and second elongated frames is connected to a respective second elongated bracket of the second pair of elongated brackets. A technical benefit may include that connecting each elongated frame to the second elongated brackets of the second pair of bracket arrangements improves the connection of the frames.

Optionally in some examples, including in at least one preferred example, the battery suspension arrangement further comprising a protection plate, the protection plate being connected at least to the second end of the second elongated bracket of each of the pair of bracket arrangements. A technical benefit may include that the protection plate provides a physical barrier against external impact, which may reduce the risk of battery damage and improve operational safety.

According to a second aspect, there is provided an energy storage arrangement, comprising a traction battery and a battery suspension arrangement according to any one of the examples described above in relation to the first aspect.

Effects and features of the second aspect are largely analogous to those described above in relation to the first aspect.

According to a third aspect, there is provided a vehicle comprising the battery suspension arrangement according to any one of the examples described above in relation to the first aspect, or energy storage arrangement according to above described second aspect.

Effects and features of the third aspect are largely analogous to those described above in relation to the first aspect.

According to a fourth aspect, there is provided a method of assembling a traction battery to a frame of a vehicle, the method comprising: attaching a pair of first elongated brackets to the frame of the vehicle, the pair of first elongated brackets being arranged at a distance from each other along an extension of the frame, suspending a traction battery between a pair of second elongated brackets, and subsequently connecting the first elongated brackets to a corresponding second elongated bracket to suspend the traction battery to the frame of the vehicle. The fourth aspect of the disclosure may seek to reduce the complexity and time required for assembling a traction battery to a vehicle frame by providing a structured method that streamlines installation. Conventional assembly processes may involve multiple sequential steps on the main assembly line, requiring precise alignment and manual adjustments, which can increase production time and labor effort. Additionally, existing methods may not effectively address challenges related to load distribution and structural stability during assembly. The disclosed method may address these issues by defining an approach that improves efficiency, reduces handling steps, and improves the attachment of the traction battery to the vehicle frame. A technical benefit may include that the assembly process is simplified by structuring the installation into defined operations, which may reduce manual adjustments and alignment efforts mounting the traction batteries. Instead of handling multiple components separately on the main assembly line, the method allows for a more systematic approach, which may improve consistency and reduce assembly errors. Another technical benefit may include that pre-defining the sequence of attaching the first elongated brackets, suspending the traction battery, and subsequently connecting the second elongated brackets may improve production efficiency by enabling an improved structured workflow. The structured workflow may reduce assembly time, contributing to higher manufacturing efficiency. Further, connecting the first and second elongated brackets in a structured manner may improve load distribution during installation, which may reduce stress on the battery housing and supporting components. Misalignment may hereby be prevented.

Optionally in some examples, including in at least one preferred example, each one of the first elongated brackets comprises a first interface portion at a lower end thereof, and wherein each of one of the second elongated brackets comprises a second interface portion at an upper end thereof, wherein the first and second elongated brackets are connected to each other by arranging the first and second interface portions in abutment with each other. A technical benefit may include that a structured engagement may be provided, which may improve alignment during assembly and reduce the need for additional positioning adjustments.

Optionally in some examples, including in at least one preferred example, the method further comprising: securing the first and second elongated brackets to each other by inserting a fastener element through aligned openings in the first and second interface portions. A technical benefit may include that the mechanical engagement of the first and second elongated brackets may be improved, which may improve stability of the connection between the first and second elongated brackets. The interface between the first and second elongated brackets may also have an improved resistance to vibrations or external forces generated during vehicle operation.

Further effects and features of the fourth aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of an energy storage arrangement with details of a battery suspension arrangement thereof according to an example,
Fig. 3 is an exploded view of a battery suspension arrangement according to an example,
Fig. 4 is an exploded view of a battery suspension arrangement according to another example,
Fig. 5 is a perspective view of a battery suspension arrangement according to an example, and
Fig. 6 is a flow chart of a method of assembling a traction battery to a frame of a vehicle according to an example.

### DETAILED DESCRIPTION

The detailed description set forth below provides information and examples of the disclosed technology with sufficient detail to enable those skilled in the art to practice the disclosure.

The following described disclosure may seek to reduce the complexity of installing traction batteries in heavy-duty electric vehicles by providing a suspension arrangement that secures the battery to the vehicle frame while allowing for a more efficient assembly process. A technical benefit may include that the assembly complexity may be reduced by allowing the traction battery to be suspended using a structured bracket arrangement, which may in turn decrease installation time and improve manufacturing efficiency.

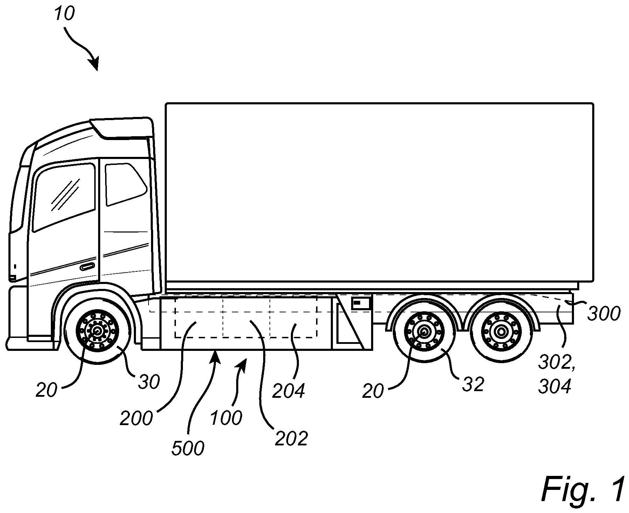

With reference to Fig. 1 which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprise a single electric traction motor connected to the wheels via a conventional propulsion shaft (not shown). The at least one electric traction motor 20 is configured to apply propulsive power to the wheels of the vehicle during propulsion, and to generate electric power during braking.

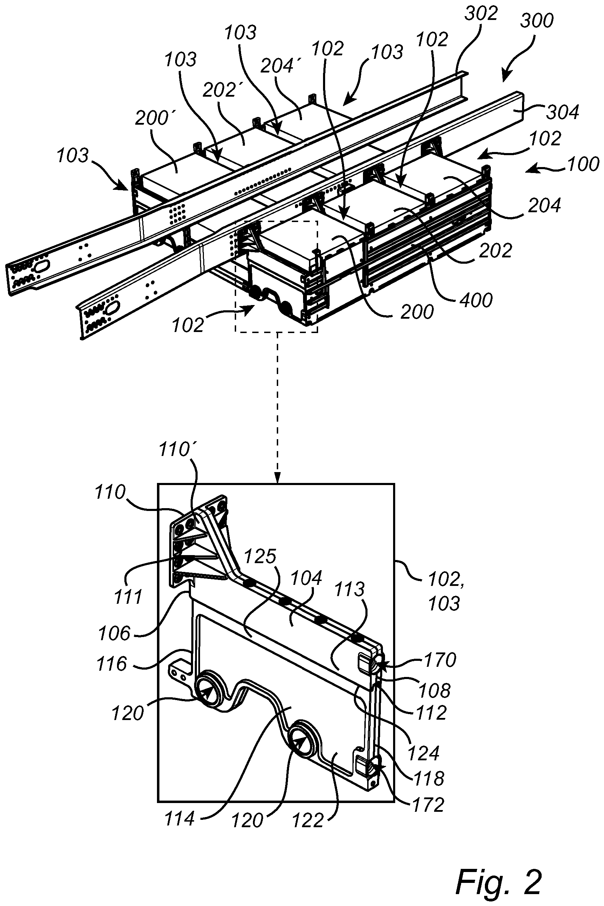

The vehicle further comprises an energy storage arrangement 500 comprising traction batteries 200, 202, 204 configured to feed electric power to the electric traction motor 20 during propulsion of the vehicle 10 and to receive electric power during braking. The arrangement in Fig. 1 exemplifies three traction batteries arranged side by side along a longitudinal direction of the vehicle 10. The traction batteries are suspended from the frame 300 of the vehicle, and in particular from a pair of longitudinally extending frame rails 303, 304 of the vehicle 10 by means of a battery suspension arrangement 100. In order to describe the battery arrangement 100 in further detail, reference is now made to Fig. 2.

Turning to Fig. 2 which is an exemplary illustration of the energy storage arrangement 500. As described above, the energy storage arrangement 500 comprises at least one traction battery 200 and a battery suspension arrangement 100 for securing the traction battery 200 to a vehicle frame 300 of the vehicle 10. In the example depicted in Fig. 2, the energy storage arrangement 500 comprises a first 200, second 202, third 204, fourth 200', fifth 202' and sixth 204' traction battery, where the first 200, second 202 and third 204 traction batteries are arranged at one side of the vehicle frame 300, while the fourth 200', fifth 202' and sixth 204' traction batteries are arranged at the other side of the vehicle frame 300 as seen in the longitudinal direction of the energy storage arrangement 500. For clarity, the following description will primarily refer to the first traction battery 200 as 'the traction battery 200' when describing the arrangement.

Fig. 2 also illustrates a battery suspension arrangement 100 for securing the traction battery 200 to the frame 300 of the vehicle 10. The battery suspension arrangement 100 comprises a pair of bracket arrangements 102, 103 configured to suspend the traction battery 200 to the frame 300. The bracket arrangements denoted with reference numeral 102 suspend the first 200, second 202 and third 204 traction batteries to the frame 300, while the bracket arrangements denoted with reference numeral 103 suspend the fourth 200', fifth 202' and sixth 204' traction batteries to the frame 300. Put it differently, the battery suspension arrangement 100 comprises a first pair of bracket arrangements 102 and a second pair of bracket arrangements 103, wherein the first pair of bracket arrangements 102 and the second pair of bracket arrangements 103 are connectable to respective longitudinally extending frame rails 302 and 304 of the vehicle 10.

Each bracket arrangement 102, 103 comprises a first elongated bracket 104 extending from a first end 106 to a second end 108. The first end 106 comprises a first surface 110 configured to be connected to the frame 300. As can be seen in the enlarged illustration of the bracket arrangement 102, 103, the first surface 110 forms part of a frame connecting portion 110' provided with holes for receiving e.g. a screw or a bolt that fixates the first elongated bracket 104 to the frame 300. The first elongated bracket 104 further comprises a first interface portion 112 arranged at a lower end 113 of the first elongated bracket 104. The first interface portion 112 extends between the first end 106 and the second end 108. In the example of Fig. 2, the first interface portion 112 extends the entire length from the first end 106 to the second end 108.

Moreover, each bracket arrangement 102, 103 also comprises a second elongated bracket 114. The second elongated bracket 114 extends from a first end 116 to a second end 118 of the second elongated bracket 114. The second elongated bracket 114 comprises a battery connecting portion 120 configured to suspend the traction battery 200, i.e. the traction battery 200 is configured to be connected or attached to the battery connecting portion 120. As can be seen in Fig. 2, the battery connecting portion 120 is positioned at a lower portion 122 of the second elongated bracket 114 and arranged between the first 116 and second 118 ends. In the example depicted in Fig. 2, the battery connecting portion 120 comprises a pair of battery connecting portions which will be described in further detail below. The second elongated bracket 114 further comprises a second interface portion 124 at an upper end 125. The second interface portion 124 extends between the first end 116 and the second end 118 of the second elongated bracket 114. In the example of Fig. 2, the second interface portion 124 extends the entire length from the first end 116 to the second end 118.

As indicated above, the first elongated bracket 104 is thus connected to the frame 300, while the second elongated bracket 114 is connected to the traction battery 200. To suspend the traction battery 200 from the frame 300, the first 104 and second 114 elongated brackets are connected to each other. In further detail, the first interface portion 112 of the first elongated bracket 104 and the second interface portion 124 of the second elongated bracket are connected to each other for fastening the first elongated bracket 104 and second elongated bracket 114 together. The first interface portion 112 of the first elongated bracket 104 and the second interface portion 124 of the second elongated bracket 114 may be arranged in abutment with each other. Examples of the first 112 and second 124 interface portions will be provided below.

Furthermore, the battery suspension arrangement 100 in Fig. 2 is exemplified as comprising a protection plate 400. The protection plate 400 may be connected to the second end 118 of the second elongated bracket 114 of each bracket arrangement 102 for providing a barrier to protect the traction battery 200 from e.g. external impacts. As can be seen, the second elongated bracket 114 comprises an aperture 172. The aperture 172 is configured to receive a bushing (not shown) connecting the protection plate 400 to the second elongated bracket 114. Additionally, the protection plate 400 may be secured to the second end 108 of the first elongated bracket 104, further reinforcing the battery suspension structure. As can be seen, the first elongated bracket 104 comprises an aperture 170 arranged to receive a bushing (not shown) connecting the protection plate 400 also to the first elongated bracket 104.

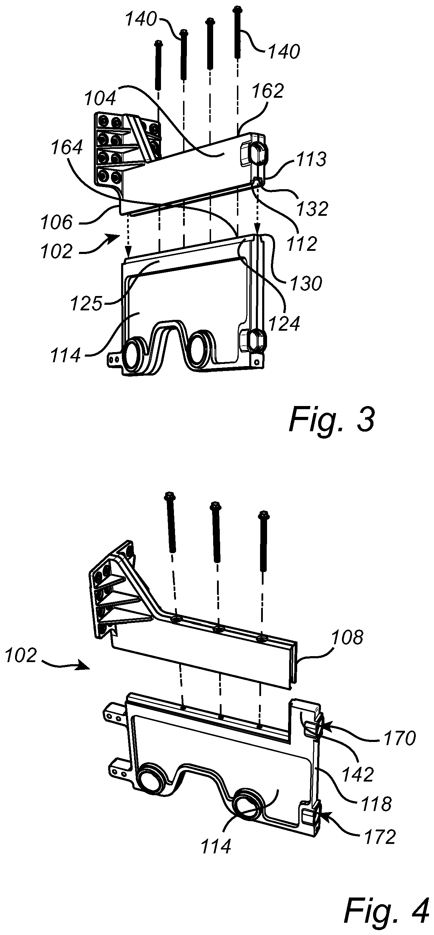

Turning now to Fig. 3 which is an exploded view of the bracket arrangement 102, 103, illustrating the first interface portion 112 and the second interface portion 124 in further detail. As shown in Fig. 3 and briefly described above, the first interface portion 112 is positioned at the lower end 113 of the first elongated bracket 104, while the second interface portion 124 is positioned at the upper end 125 of the second elongated bracket 114.

The first interface portion 112 and the second interface portion 124 may preferably be configured to engage in a form-locking connection. Hereby, a relative movement between the first elongated bracket 104 and the second elongated bracket 114 may be restricted when the first 104 and second 114 elongated brackets are connected to each other. In the example depicted in Fig. 3, the form-locking connection is provided by interlocking shapes of the first interface portion 112 and the second interface portion 124. In the example depicted in Fig. 3, the interlocking shapes may be provided by arranging one of the first 112 and second 124 interface portions with an elongated protrusion 130, while the other one of the first 112 and second 124 interface portions comprises a corresponding elongated recess 132. The elongated protrusion 130 is thus shaped to fit within the elongated recess 132. In the example depicted in Fig. 3, the first interface portion 112 comprises the elongated recess 132 and the second interface portion 124 comprises the elongated protrusion 130, although the opposite arrangement may also be applicable.

Furthermore, the exemplified bracket arrangement 102, 103 comprises at least one fastener element 140, which is arranged to secure the first elongated bracket 104 and the second elongated bracket 114 to each other. As illustrated in Fig. 3, the fastener element 140 extends through aligned openings 162, 164 in the first interface portion 112 and the second interface portion 124, providing additional mechanical fixation. The fastener element 140 may be a screw or a bolt. In some examples, the openings 164 of the second elongated bracket 114 may be threaded to engage with the fastener element 140.

Turning now to Fig. 4, which illustrates the second end 118 of the second elongated bracket 114 in further detail. As shown, the second elongated bracket 114 comprises a vertically extending portion 142 at the second end 118. The vertically extending portion 142 extends in an upward direction relative to the remainder of the second elongated bracket 114. As further shown in Fig. 4, at least a portion of the second end 108 of the first elongated bracket 104 is facing the vertically extending portion 142 of the second elongated bracket 114.

Furthermore, in the example depicted in Fig. 4, both of the above described apertures 170, 172 are arranged at the second end 118 of the second elongated bracket 114. In a similar vein as the above description, the apertures 170, 172 are configured to receive a respective bushing (not shown) for connecting the protection plate 400 to the second elongated bracket 114.

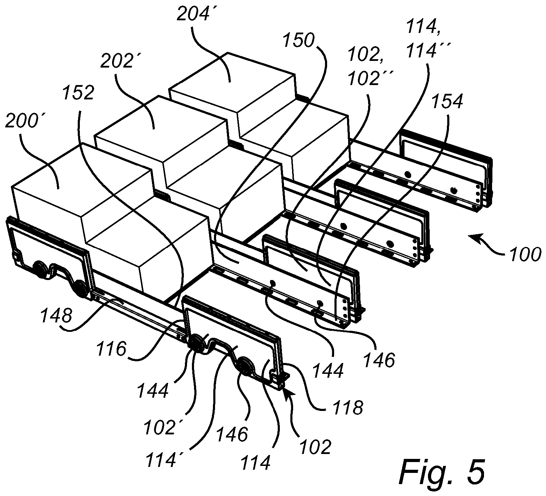

Turning now to Fig. 5, which is a perspective view of a battery suspension arrangement 100 according to an example. In Fig. 5, the first 200, second 202 and third 204 traction batteries, as well as the first pair of elongated brackets 104 have been omitted to simplify the illustration for the skilled reader. As can be seen in Fig. 5, the battery suspension arrangement 100 comprises the above described pair of second elongated brackets 114. Each second elongated bracket 114 comprises the above described battery connecting portion 120, to which the traction battery is attached. In the example shown in Fig. 5, the battery connecting portion 120 comprises a first battery supporting bushing 144 and a second battery supporting bushing 146. The first battery supporting bushing 144 is positioned closer to the first end 116 of the second elongated bracket 114 than the second battery supporting bushing 146. Further, the first and second battery supporting bushings 144, 146 are arranged in opposite directions relative to each other, which means that they are oriented toward opposite ends of the vehicle frame in the longitudinal direction.

As further shown in Fig. 5, the first battery supporting bushing 144 of a first one 114' of the second elongated brackets 114 is arranged in a direction toward a second one 114'' of the second elongated brackets 114. In a similar vein, the second battery supporting bushing 146 of the second one 114'' of the second elongated brackets 114 is arranged in a direction toward the first one 114' of the second elongated brackets 114. Hereby, a pseudo-three-point suspension may be provided for the traction battery.

Furthermore, in the exemplified Fig. 5, the battery suspension arrangement 100 comprises a first elongated frame 148 and a second elongated frame 150. Each elongated frame 148, 150 comprises a battery support surface 152, 154, which is configured to support the traction battery. In further detail, the first elongated frame 148 is connected to the second elongated bracket 114 of a first one 102' of the pair of bracket arrangement 102, and the second elongated frame 150 is connected to the second elongated bracket 114 of a second one 102'' of the pair of bracket arrangement 102. In the example of Fig. 5, the first elongated frame 148 is connected to the first battery supporting bushing 144 of the first one 114' of the second elongated brackets 114, while the second elongated frame 150 is connected to the second battery supporting bushing 146 of the second one 114" of the second elongated brackets 114.

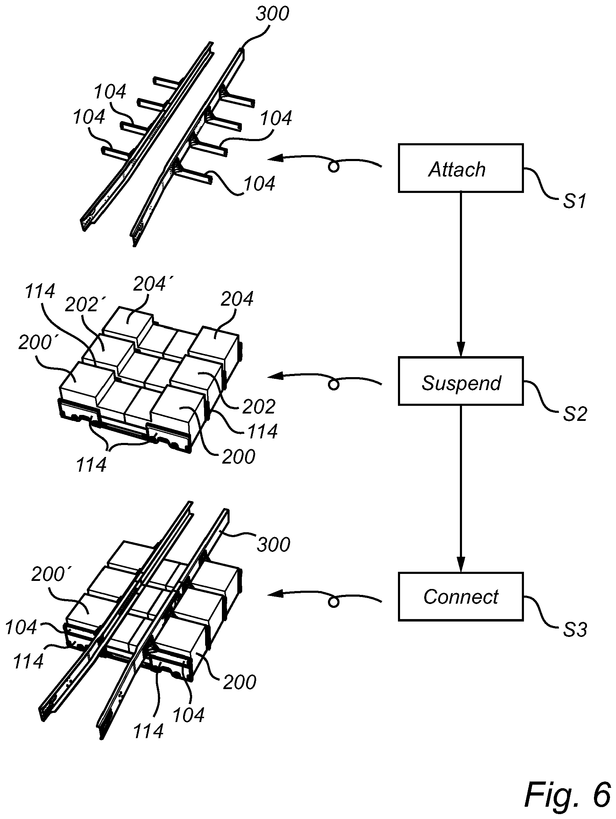

Turning now to Fig. 6 which is a flow chart of a method of assembling the traction battery to the frame of a vehicle according to an example. The exemplified method comprises a sequence of operations for securing the traction battery 200 to the frame by means of the battery suspension arrangement 100.

In a first operation, the above described pair of first elongated brackets 104 is attached S1 to the frame 300 of the vehicle 10. The first elongated brackets 104 are arranged at a distance from each other along an extension of the frame 300, thereby forming mounting points for the subsequent assembly of the traction battery 200.

In a second operation, which may be performed before, after, or at the same time as the first operation, the traction battery 200 is suspended S2 between a pair of second elongated brackets 114. Thereafter, the first elongated brackets 104 are connected S3 to a corresponding second elongated bracket 114, thereby suspending the traction battery 200 to the frame 300. The connection between the first 104 and second 114 elongated brackets hereby connects the traction battery 200 to the frame 300 of the vehicle.

Moreover, the method may further comprise an operation in which the first elongated brackets 104 and the second elongated brackets 114 are secured to each other. In further detail, a fastener element 140 may be inserted through the above described aligned openings 162, 164 in the first 112 and second 124 interface portions, to secure the first and second elongated brackets together.

### EXAMPLE LIST

Example 1. A battery suspension arrangement for a vehicle, the battery suspension arrangement comprising a pair of bracket arrangements configured to suspend a traction battery to a frame of the vehicle, each one of the pair of brackets arrangements comprising a first elongated bracket extending from a first end to a second end, wherein the first end comprises a first surface configured to be connected to the frame of the vehicle, the first elongated bracket further comprising a first interface portion arranged at a lower end and extends between the first and second ends, a second elongated bracket extending from a first end to a second end, the second elongated bracket comprising a battery connecting portion configured to suspend the traction battery, wherein the battery connecting portion is arranged at a lower portion of the second elongated bracket between the first and second ends, the second elongated bracket further comprising a second interface portion arranged at an upper end and extends between the first and second ends, wherein the first and second interface portions are connected to each other for fastening the first and second elongated brackets to one another.

Example 2. The battery suspension arrangement of example 1, wherein the first and second interface portions are configured to engage in a form-locking connection to restrict relative movement between the first and second elongated brackets.

Example 3. The battery suspension arrangement of example 2, wherein the form-locking connection is provided by interlocking shapes of the first and second interface portions.

Example 4. The battery suspension arrangement of any one of examples 2 or 3, wherein one of the first and second interface portions comprises an elongated protrusion, and the other one of the first and second interface portions comprises a corresponding elongated recess that interlocks with the protrusion.

Example 5. The battery suspension arrangement of any one of the preceding examples, further comprising at least one fastener element securing the first and second brackets to each other.

Example 6. The battery suspension arrangement of example 5, wherein the at least one fastener element extends through the first and second interface portions.

Example 7. The battery suspension arrangement of any one of examples 5 or 6, wherein the at least one fastener element is one of a screw or a bolt.

Example 8. The battery suspension arrangement of any one of the preceding examples, wherein the second end of the second elongated bracket comprises a vertically extending portion, and wherein at least a portion of the second end of the first elongated bracket faces the vertically extending portion.

Example 9. The battery suspension arrangement of any one of the preceding examples, wherein the battery connecting portion comprises a first and a second battery supporting bushing, the first battery supporting bushing being positioned closer to the first end of the second elongated bracket than the second battery supporting bushing, and wherein the first and second battery supporting bushings are arranged in opposite directions relative to each other.

Example 10. The battery suspension arrangement of example 9, wherein the first battery supporting bushing of a first one of the second elongated brackets is arranged in a direction toward a second one of the second elongated brackets, and wherein the second battery supporting bushing of the second one of the second elongated brackets is arranged in a direction toward the first one of the second elongated brackets.

Example 11. The battery suspension arrangement of any one of the preceding examples, further comprising a first and second elongated frame, each one of the first and second elongated frames comprises a battery support surface configured to suspend the traction battery.

Example 12. The battery suspension arrangement of example 11, wherein the first elongated frame is connected to the second bracket of a first one of the pair of brackets arrangements, and wherein the second elongated frame is connected to the second bracket of a second one of the pair of brackets arrangements.

Example 13. The battery suspension arrangement of any one of the preceding examples, wherein the pair of bracket arrangements is a first pair of bracket arrangements, the battery suspension arrangement further comprising a second pair of bracket arrangements, wherein the first and second pair of bracket arrangements are connectable to a respective longitudinally extending frame rail of the frame of the vehicle.

Example 14. The battery suspension arrangement of example 13 when dependent on any one of examples 11 or 12, wherein each one of the first and second elongated frames is connected to a respective second elongated bracket of the second pair of elongated brackets.

Example 15. The battery suspension arrangement of any one of the preceding examples, further comprising a protection plate, the protection plate being connected at least to the second end of the second elongated bracket of each of the pair of bracket arrangements.

Example 16. An energy storage arrangement, comprising a traction battery and a battery suspension arrangement according to any one of the preceding examples.

Example 17. A vehicle comprising the battery suspension arrangement according to any one of examples 1 - 15, or energy storage arrangement according to example 16.

Example 18. A method of assembling a traction battery to a frame of a vehicle, the method comprising: attaching a pair of first elongated brackets to the frame of the vehicle, the pair of first elongated brackets being arranged at a distance from each other along an extension of the frame, suspending a traction battery between a pair of second elongated brackets, and subsequently connecting the first elongated brackets to a corresponding second elongated bracket to suspend the traction battery to the frame of the vehicle.

Example 19. The method of example 18, wherein each one of the first elongated brackets comprises a first interface portion at a lower end thereof, and wherein each of one of the second elongated brackets comprises a second interface portion at an upper end thereof, wherein the first and second elongated brackets are connected to each other by arranging the first and second interface portions in abutment with each other.

Example 20. The method of example 19, further comprising: securing the first and second elongated brackets to each other by inserting a fastener element through aligned openings in the first and second interface portions.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery suspension arrangement (100) for a vehicle (10), the battery suspension arrangement comprising a pair of bracket arrangements (102) configured to suspend a traction battery (200) to a frame (300) of the vehicle, each one of the pair of brackets arrangements comprising
- a first elongated bracket (104) extending from a first end (106) to a second end (108), wherein the first end comprises a first surface (110) configured to be connected to the frame of the vehicle, the first elongated bracket further comprising a first interface portion (112) arranged at a lower end (113) and extends between the first (106) and second (108) ends,
- a second elongated bracket (114) extending from a first end (116) to a second end (118), the second elongated bracket comprising a battery connecting portion (120) configured to suspend the traction battery, wherein the battery connecting portion is arranged at a lower portion (122) of the second elongated bracket between the first and second ends, the second elongated bracket further comprising a second interface portion (124) arranged at an upper end (125) and extends between the first (116) and second (118) ends,
wherein the first (112) and second (124) interface portions are connected to each other for fastening the first (104) and second (114) elongated brackets to one another.

2. The battery suspension arrangement (100) of claim 1, wherein the first (112) and second (124) interface portions are configured to engage in a form-locking connection to restrict relative movement between the first (104) and second (114) elongated brackets.

3. The battery suspension arrangement (100) of claim 2, wherein the form-locking connection is provided by interlocking shapes of the first and second interface portions.

4. The battery suspension arrangement (100) of any one of claims 2 or 3, wherein one of the first (112) and second (124) interface portions comprises an elongated protrusion (130), and the other one of the first (112) and second (124) interface portions comprises a corresponding elongated recess (132) that interlocks with the protrusion (130).

5. The battery suspension arrangement (100) of any one of the preceding claims, further comprising at least one fastener element (140) securing the first (104) and second (114) elongated brackets to each other.

6. The battery suspension arrangement (100) of claim 5, wherein the at least one fastener element (140) extends through the first (112) and second (124) interface portions.

7. The battery suspension arrangement (100) of any one of claims 5 or 6, wherein the at least one fastener element (140) is one of a screw or a bolt.

8. The battery suspension arrangement (100) of any one of the preceding claims, wherein the second end (118) of the second elongated bracket comprises a vertically extending portion (142), and wherein at least a portion of the second end (108) of the first elongated bracket (104) faces the vertically extending portion (142).

9. The battery suspension arrangement (100) of any one of the preceding claims, wherein the battery connecting portion (120) comprises a first (144) and a second (146) battery supporting bushing, the first battery supporting bushing (144) being positioned closer to the first end (116) of the second elongated bracket (114) than the second battery supporting bushing (146), and wherein the first and second battery supporting bushings are arranged in opposite directions relative to each other.

10. The battery suspension arrangement (100) of claim 9, wherein the first battery supporting bushing (144) of a first one (114') of the second elongated brackets (114) is arranged in a direction toward a second one (114'') of the second elongated brackets (114), and wherein the second battery supporting bushing (146) of the second one (114'') of the second elongated brackets (114) is arranged in a direction toward the first one (114') of the second elongated brackets (114).

11. The battery suspension arrangement (100) of any one of the preceding claims, further comprising a first (148) and second (150) elongated frame, each one of the first (148) and second (150) elongated frames comprises a battery support surface (152, 154) configured to suspend the traction battery.

12. An energy storage arrangement (500), comprising a traction battery and a battery suspension arrangement according to any one of the preceding claims.

13. A vehicle (10) comprising the battery suspension arrangement (100) according to any one of claims 1 - 11, or energy storage arrangement (500) according to claim 12.

14. A method of assembling a traction battery (200, 200', 202, 202', 204, 204') to a frame (300) of a vehicle (10), the method comprising:
- attaching (S1) a pair of first elongated brackets (104) to the frame (300) of the vehicle, the pair of first elongated brackets being arranged at a distance from each other along an extension of the frame,
- suspending (S2) a traction battery (200, 200', 202, 202', 204, 204') between a pair of second elongated brackets (114), and subsequently
- connecting (S3) the first elongated brackets (104) to a corresponding second elongated bracket (114) to suspend the traction battery to the frame of the vehicle.

15. The method of claim 14, wherein each one of the first elongated brackets (104) comprises a first interface portion (112) at a lower end thereof, and wherein each of one of the second elongated brackets (114) comprises a second interface portion (124) at an upper end thereof, wherein the first and second elongated brackets are connected to each other by arranging the first and second interface portions in abutment with each other.
